# EUROPEAN PATENT APPLICATION

(11) **EP 3 290 324 A1**
(43) Date of publication of application: **07.03.2018**
(21) Application number: 16186405.3
(22) Date of filing: 30.08.2016
(51) Int. Cl.: B63B 1/38

(54) **DUAL CAVITY AIR LUBRICATION SYSTEM**

(71) Applicant: Silverstream Technologies B.V., 1185 VB Amstelveen (NL)
(72) Inventor: Silberschmidt, Noah, London, SW10 9SA (GB); Johannesson, Johannes, DK-3060 Espergaerde (DK); Pappas, Panayiotis, London, NW1 6NT (GB); Tasker, Dominic, London, SE17 3LJ (GB)
(74) Representative: Nederlandsch Octrooibureau

(57) **Abstract**

The invention relates to a dual cavity air lubrication system comprising an air flow splitter with an air inlet pipe branching into a first branch pipe and a second branch pipe, wherein a first passive valve is arranged in the first branch pipe and a second passive valve is arranged in the second branch pipe, wherein said branch pipes are in fluid communication with each other upstream from their respective valves, and wherein said valves are adapted for regulating the flow of air to respective air cavities to compensate for difference in air pressure in said cavities caused by a relative change in level of the cavities due to roll or heel of the vessel.

## Description

### Field of the invention

The present invention relates to a dual cavity air lubrication system comprising a first and a second air cavity which are arranged for providing air to an air lubricating layer between a substantially flat bottom of a vessel and the water flowing under the bottom as the vessel is moving through the water. The invention also relates to a vessel, in particular a displacement vessel, provided with a number of such air lubrication systems.

### Background art

Such an air lubrication system is known from WO 2013/125951, which schematically shows in figures 1 and 2 a side view of a vessel and a bottom view thereof respectively, said vessel having a hull, wherein at a bottom surface of said hull two rows of cavities are provided, each row having five cavities arranged next to each other across the width of the vessel. Further shown are a compressor which takes in atmospheric air through a duct and supplies air to a cavity. When the vessel is sailing through the water, the moving water across a water air-interface in the cavity results in a Kelvin-Helmholtz mixing effect and forms air bubbles which escape via a bubble outflow region at the rear end of the cavity and towards the aft of the hull to cover a portion of the bottom surface. This reduces the drag of the water on the bottom surface during sailing.

For proper control of the airflow from each cavity, and with a view to providing a redundant system in case of failure, WO 2015/133900 A1 proposes providing a compressor for each cavity or pair of cavities on opposite sides of the centre line of the hull at a predetermined length position, for injecting air into the cavity at a pressure substantially corresponding to the hydrostatic pressure in each cavity. When a compressor is provided for each cavity, the air flow into each cavity can be effectively controlled by setting the output of the compressor.

However, when a single compressor is used to supply air to a pair of air cavities, the air pressure within one cavity may differ significantly from the air pressure within another cavity that is arranged at a different position. For instance, during roll of the ship, movement of a wave across one or both cavities, and/or when one of the cavities is submerged in the water at one depth while the other located at a different depth, the pressures in the cavities will differ significantly. This can lead to collapse of the air lubricating layer at one or both of the cavities.

It is an object of the present invention to provide a compact, cost effective and reliable dual cavity air lubrication system.

It is a further object to provide a dual cavity air lubrication system capable of providing a more stable and/or even air supply to each individual air cavity.

It is a further object to provide such an air lubrication system which provides a more independent air flow to each cavity during wave induced motions of the hull of a vessel at which the cavities are arranged,

### Summary of the invention

To this end, according to a first aspect, the present invention provides a dual cavity air lubrication system comprising: a first air cavity and a second air cavity spaced apart therefrom, wherein said first and second air cavity are adapted for providing an air lubricating layer between the hull of a vessel and the water flowing under the hull as said vessel is moving through the water; an air flow splitter comprising an air inlet pipe which branches into a first branch pipe which is connected to said first air cavity, and a second branch pipe which is connected to said second air cavity; an air compressor connected to said air inlet pipe for supplying air to both said first and second air cavity; wherein said system further comprises: a first passive valve arranged in said first branch pipe, and a second passive valve arranged in said second branch pipe, wherein said branch pipes are in fluid communication with each other upstream from their respective valves, and wherein said valves are adapted for regulating the flow of air to said air cavities to compensate for difference in air pressure in said cavities caused by a relative change in level of the cavities due to roll or heel of the vessel.

The passive valves cause a back pressure in the air inlet pipe as well as a pressure drop across the valves in the respective branch pipes, so that even under rough sailing conditions in which there are sudden relative changes between the level at which the first air cavity is submerged in the water and the level at which the second air cavity is submerged in the water, the pressure at the upstream side of each valve, i.e. at the side closest to the air inlet pipe along the direction of the air flow of the air inlet pipe to the branch pipe, will be generally be substantially higher than the pressure at the downstream side of the valve. Due to the drop in air pressure caused by both the valves a more even distribution of air to both cavities is achieved even if different hydrostatic pressures are present in each cavity. Similarly, the stability of the air flow from the air inlet pipe through each of the respective valves and air cavities is improved, even during roll and heel of the vessel.

When the air pressure in at least one of the air cavities increases such that the pressure in that air cavity exceeds the air pressure in the air inlet pipe, the corresponding valve will inhibit or block flow of air from that air cavity past the valve. This prevents air from being pushed out of the air cavity and back into the air inlet pipe, and further improves the stability of the air flow to the air cavity, as a reversal of the air flow is substantially prevented. The same applies if the air pressure in both the first and second air cavity exceeds that of the air inlet pipe. A likely collapse of the air lubricating layer at an air cavity when the air flow is directed from the air cavity through the valve back towards the air inlet pipe would, is thus prevented.

Because the valves are passive, i.e. the degree of opening/closing of the valves during operation of the system depends only on the pressure/flow rate in the respective branch pipes, the system can respond sufficiently fast to sudden changes in air pressure in the air cavities to substantially prevent collapse of the air lubrication layer at both cavities.

It has been found that if, instead of passive valves, valves are used which are actively controlled, e.g. when opening and closing of the valves is powered by a motor in dependence on sensor measurements or when the valves are manually operated by personnel in dependence on measured differences in air pressure between the air cavities, opening and closing of the valves is not carried out fast enough to prevent collapse of the air lubricating layer at one or both of the cavities when the vessel is rolling.

In general, the higher the rate of air flow through each valve, the greater the resistance caused by the valve and consequently the greater the pressure drop across the valve will be. The degree to which a valve in one of the branch pipes inhibits or block flow of air there through thus depends on which portion of the total air flow from the air inlet pipe passes through that valve, and consequently also on which portion of the total air flow from the air inlet pipe passes through the valve in the other branch pipe. Thus, each of the valves aids in providing a more even flow of air to its respective cavity, regardless of whether the air pressure in both air cavities is below the air pressure in the air inlet pipe, or the air pressure in one the air cavities is above the air pressure in the air inlet pipe.

The present invention thus provides a compact and relatively low cost air lubrication system in which both air cavities are supplied with air by the same air compressor, while preventing pressure fluctuations due to roll or heel of the vessel in one cavity from affecting the operation of the other cavity or cavities. The invention can easily be extended to comprise a number of air cavities greater than two, e.g. to four or six air cavities, as long as the air flow splitter comprises a same number of branch pipes as there are air cavities, each branch pipe having a corresponding passive valve arranged therein, and as long as the branch pipes at their ends upstream of the valves are in fluid communication with each other.

In an embodiment the first and second valves are non-return valves or leaky non-return valves arranged for substantially blocking flow of air from the respective air cavities to the air inlet pipe. Non-return valves have a predetermined opening pressure, i.e. open when the pressure at their downstream side is smaller than the pressure at their upstream side by at least said predetermined opening pressure, and otherwise are closed. A suitable value for the opening pressure has been found to be 20 mbar, so that the non-return valves are open when the pressure at their respective downstream sides is at least 20 mbar lower than at their upstream sides. The non-return valves may be selected for instance from the group of spring loaded check valves, clapper type non-return valves, diaphragm check valves, and so on. Though preferably the first and second non-return valves are both the same kind of valve with a same opening pressure, preferably a spring loaded wafer check valve with an opening pressure of 20 mbar, it is possible to use a different kind of valve in the first branch pipe than in the second branch pipe instead.

Leaky non-return valves also open when the pressure at their downstream side is smaller than the pressure at their upstream side by at least a predetermined opening pressure, but otherwise, as long as the pressure at the downstream side is lower than the pressure at the upstream side, close only to an extent that still allows some air to flow through the valve. The use of leaky non-return valves thus results in a smoother change in air flow rate to the air cavities when compared to regular non-return valves.

In an embodiment said first and second valves are pressure-differential regulator valves adapted for causing a predetermined substantially constant pressure drop across the valve, preferably a pressure drop of 20mbar or more. More preferably the predetermined pressure drop is between 100 and 200 mbar, corresponding to a pressure difference between two air cavities when one of the cavities is submerged between 1 and 2 m deeper in the water than the other cavity. A pressure-differential regulator valve in general increases an aperture through which it allows air to flow when the pressure differential between the outlet and the inlet of the valve increases, and reduces the aperture when the pressure differential decreases. When the pressure differential between the inlet and outlet is constant, the valve allows some air to flow through while causing the predetermined pressure drop. The use of pressure differential valves thus results in a more constant pressure drop across each valve and consequently a more constant flow rate to the air cavities.

In an embodiment the first and second valves are each adapted for regulating a pressure drop at its respective branch pipe such that there is a pressure drop of at least 20 mbar, preferably at least 100 mbar, from an inlet side of said valve to an outlet side of said valve when the compressor supplies air to said air inlet pipe to generate the air lubricating layer. Even when the pressure in the air cavity suddenly increases by the same amount, the pressure at the upstream side of the valve will be higher than at the downstream side. Depending on the opening pressure of the valve, air may then still flow from the higher pressure side of the valve to the lower pressure portion of the valve. Preferably, each of the valves is further adapted for regulating said pressure drop such that it is less than or equal to 200mbar. It has been found that a pressure drop between 20mbar and 200 mbar for each valve results in a more even and constant rate of air flow through the branch pipes, while the power consumption of the air compressor for supplying the flow of air to the branch pipes stays within acceptable limits. For most applications, when the valves each regulate the pressure drop to be greater than 200 mbar, the corresponding required power consumption by the air compressor is too large to be economically viable.

In an embodiment said first and second valve are each biased towards allowing flow of air through said valve in a downstream direction of its respective branch pipe and against allowing flow of air through said valve in the opposite direction. Each of the valves thus more easily allows flow of air in the downstream direction when the pressure at its upstream side is higher than at its downstream side by a certain amount, than in the upstream direction when the pressure at its downstream side is higher than at its upstream side by the same amount. Such biasing may be achieved in a manner commonly known in the art, e.g. by using a spring, and/or using elastic valve membranes.

In an embodiment said first and second branch pipe each comprise a restricted pipe section having a smaller cross-sectional flow area than said air inlet pipe, wherein said passive valve is arranged in the first restricted pipe section and said second passive valve is arranged in the second restricted pipe section. The first and second restricted pipe sections cause a further drop in pressure in the air flow from the air inlet pipe to downstream ends of the branch pipes. The combined drop in air pressure caused by each restricted section and the corresponding valve placed therein helps to provide a more even distribution of air to both cavities.

A passive valve typically has a minimum flow rate that is required to keep the valve open in a stable position. As the cross-sectional flow area is larger for the air inlet pipe than for the respective restricted sections, the flow rate of air flowing in a downstream direction, i.e. air flowing from the air inlet to the downstream ends of the branch pipes, is increased at the restricted sections. This enables each valve in a respective restricted section to allow air to pass through from the air inlet pipe to its air cavity even if the flow rate of the air stream at the air inlet pipe is relatively low. A stable and reliable operation of the valves can thus be achieved even at low rpm counts of the air compressor which supplies air to the air inlet pipe.

In an embodiment said first and second branch pipes each further comprise an outlet section downstream from its restricted section and connected thereto and having a larger cross-sectional flow area than said restricted section. The restricted section thus throttles air flow from outlet section of a branch pipe to the air inlet pipe and/or to the other branch pipe. This substantially reduces propagation of sudden changes in air pressure in the air cavity to beyond the restricted section.

When the valves used are non-return valves, pressure fluctuations originating in one cavity are substantially isolated from the other cavity by the non-return valves which only open when the respective pressures at their upstream sides are greater by at least the predetermined opening pressures than the pressures at their downstream sides. The restriction in cross-section flow area from an outlet section to its corresponding restricted section and a resulting increase in air flow rate from the outlet section to the corresponding non-return valve enables faster closing of the valve if the valve does not operate at at least its opening pressure.

In an embodiment said cross-sectional flow area of said first and/or second outlet section is smaller than that of the air inlet pipe, preferably by a factor 2 or more, more preferably by a factor between 2 and 3,5, and most preferably by a factor of about 2,25. For instance, if the air inlet pipe and the outlet sections all have circular cross-sectional flow areas, and the inner diameter of the air inlet section is about 15,24 cm (i.e. about 6 inches), and the diameter of both outlet sections is about 10,16 cm (about 4 inches), then the cross-sectional flow area of each outlet section would be about 2,25 times less than that of the air inlet pipe. The diameters are herein provided purely by way of example. Depending on the desired rate of air flow there through pipes having other cross-sectional flow areas or other diameters may be used instead.

In an embodiment the cross-sectional flow area of said first and/or second restricted pipe section is smaller by a factor 3 or more than that of the air inlet pipe, more preferably by a factor between 3 and 8, most preferably by a factor 4. For instance, if the air inlet pipe and the restricted sections all have circular cross-sectional flow areas, and the inner diameter of the air inlet section is about 15,24 cm (i.e. about 6 inches), and the inner diameter of both restricted sections is about 7,62 cm (i.e. about 3 inches) then the cross-sectional flow area of each restricted section would be about 4 times less than that of the air inlet pipe. These ratios in cross-sectional flow areas have been found to work particularly well in practice.

In an embodiment said first and second branch pipe each further comprise a pipe section which extends from said air inlet pipe to the respective restricted section, said pipe section having a larger cross-sectional flow area than said restricted section, preferably substantially equal to said cross-sectional flow area of the air inlet pipe. The air inlet pipe preferably transitions smoothly into the first and second branch pipe. For instance, the air inlet pipe and the pipe sections of the first and second and branch pipes may each have an inner diameter of 15,24 cm.

In an embodiment the restricted section of each branch pipe is arranged at distance of less than 5 m, preferably less than 3 m, most preferably less than 1,5 m from the connection of said branch pipe to its corresponding air cavity. Any fluctuation in air pressure originating from an air cavity will thus propagate only a short distance before reaching the restricted section and/or before being blocked from propagating any further by the non-return valve arranged therein. The isolation of pressure fluctuations in the cavities, as provided by the present invention, is of particular importance when the air cavities are arranged close to each other. In prior art dual cavity air lubrication systems such short distances were undesirable as at these distances a sudden pressure in one cavity would almost immediately result in a sudden pressure change in the other cavity.

In an embodiment the cross-sectional flow area of said branch pipes and/or said restricted sections thereof has a circular contour, preferably wherein the cross-section flow area of said air inlet pipe has a circular contour.

In an embodiment the dual cavity air lubrication system further comprises an adjustable valve in said air inlet pipe. The degree to which the adjustable valve is open or closed is set manually by an operator, or is controlled using a motor or other actuator that is not powered by the flow of air through the air inlet pipe. When the system is in operation, i.e. when it provides pressurized air from the air compressor via the air inlet pipe to one or both branch pipes, the adjustable valve can be used to set the air pressure for the air cavities that are fluidly connected to the respective branch pipes. When the system is not in operation, e.g. when the compressor is switched off and/or does not supply pressurized air, the adjustable valve is typically closed so that ingress+ of water and water vapour to the air compressor is prevented. When the adjustable valve is closed, opening of one or both of the non-return valves may be substantially prevented as well.

In an embodiment the first branch pipe and said second branch pipe each have a length of less than 10m from their end proximate to the air splitter section to the ends connected to their respective air cavity. The relatively short length of each branch pipe reduces the total length of the required piping. Though the first and second branch pipes do not need to have a substantially same length, the length of each branch pipe is preferably is less than 5m to keep the total length of piping low.

In an embodiment said first branch pipe and said second branch pipe are substantially of equal shape and length.

In an embodiment, the air flow splitter is provided with a heat insulating material along at least half the length thereof. This protects personnel from burns if they accidentally come in into contact with the air inlet pipe and/or branch pipes, which may become very hot (> 60 degrees Celsius) since air compressor and the air supplied thereby typically heat up significantly.

The air flow splitter may comprise or be made of galvanized steel, making it less susceptible to corrosion. This is especially important when the system is used in a salt water environment.

The first air cavity may be defined by a first chamber and the second air cavity may be defined by a second chamber separate from said first chamber, wherein each chamber is sealed off from the other, e.g. by an air-tight wall, so that fluid communication between the air cavities can substantially only take place through the air flow splitter.

In an embodiment said first and second air cavities each comprise: sidewalls and a top wall defining said cavity with an opening situated in an interface plane that is transversal to the sidewalls, the opening having a front end and a rear end seen in the length direction of the cavity, an air inlet spaced from the opening and connected to one of said branch pipes for introducing air into the cavity, wherein the length of the opening of the cavity is between 2 and 10 m, and the distance of the top wall from the interface plane is between 0,2 m and 0,5 m. Thus a compact air lubrication system is provided in which two air cavities are supplied with air from a single air inlet pipe, and wherein the dual cavity air lubrication system is arranged for dampening sudden changes in air pressure in each air cavity. The more stable air pressure in each air cavity results in an improved stability of the air lubricating layer and reduces the chance of the air lubricating layer at one or both of the cavities collapsing.

In an embodiment said air compressor is the only air compressor that is connected to said air inlet pipe for supplying air to both said first and second air cavity. The air inlet pipe is preferably directly connected to the air compressor, i.e. without other branches or pipes between the air compressor and the air inlet pipe.

The present invention furthermore provides a vessel, or displacement vessel, comprising a hull having a centre line, opposing sides and a substantially flat bottom, the vessel having a number of air lubricating systems as described herein.

Preferably, the cavities of the dual cavity air lubricating systems each have a length, a distance of the top wall from the interface plane (Hc) and a width (W), wherein the ratio Lc/Hc is in the range of 7:1 to 13:1, the ratio W/H is in the range of 1.3:1 to 2.5:1 and the ratio Lc/W is in the range of 3.5 to 1 to 7:1. The invention provides a reduced drag of the vessel when the air lubricating systems are operation, with each of the air lubrication systems adapted for dampening sudden changes in air pressure in each of the air cavities connected thereto, resulting in generation of a more stable air lubrication layer

In an embodiment said first and second air cavity of one or more of said dual cavity air lubricating systems are arranged adjacent to each other along the width of the hull. This embodiment may be advantageously used when the distance between the first and second cavities is relatively small and allows a particularly compact arrangement. Preferably the first and second air cavities of a majority or all of the dual cavity air lubricating systems of the vessel are arranged in this manner.

In an embodiment the vessel accommodates said first and said second air cavities of each of said air lubricating systems on opposite sides of the center line at a predetermined length position. In this arrangement of air cavities it is generally advantageous to supply substantially a same air flow to each of the cavities, which is easily done using the dual cavity air lubrication system. This substantially same air flow may be regulated for both cavities at the same time, by adjusting the adjustable valve and/or by adjusting the air flow output by the compressor.

In an embodiment the vessel accommodates said first and said second air cavities of each of said air lubricating systems on a same side of the centre line at a predetermined length position, and wherein said first air cavity neighbours said second air cavity. The branch pipes can thus be kept particularly short.

### Short description of drawings

Some embodiments of the present invention will be discussed in more detail below by way of non-limiting examples, with reference to the attached drawings, in which:
Fig. 1 shows a schematic side view of a vessel comprising an air lubrication system according to the invention,
Fig. 2 shows an arrangement of air cavity pairs near the bow of a ship,
Fig. 3A and 3B respectively show a schematic cross-sectional view and a top view of an air flow splitter of a dual cavity air lubrication system according to the invention,
Fig 3C schematically shows a cross-sectional view of the cavities 54, 54' of figure 2 connected to an air flow splitter of figures 3A and 3B,
Fig. 4A - 4D respectively show cross-sectional flow areas through lines A-A, B-B, C-C- and D-D of figure 3B,
Fig. 5 shows a graph of a pressure drop across the non-return valves in the dual cavity air lubrication supply system according to the invention,
Fig. 6 shows a schematic view of a dual cavity air lubrication system according to the invention,
Fig. 7 shows a schematic view of the opening of an air cavity of Fig 6, seen from the bottom of the vessel.

### Description of embodiments

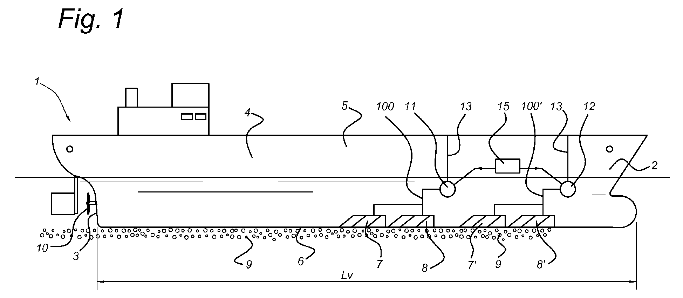

Figure 1 shows a vessel 1 having a length Lv of between 20 m and 500 m, and a width between 5 m and 75 m. The vessel 1 may have a water displacement of at least 10000 ton, preferably at least 50000 ton and is an ocean going vessel. The vessel 1 has a hull 4 with a bow 2, a stern 3, sides 5 a substantially flat bottom 6 and a propeller 10. Air lubricating cavities 7,8 and 7',8' that are open in the plane of the bottom 6, are distributed along the bottom 6 to generate a layer of bubbles 9 travelling towards the stern 3, along the flat bottom 6. A single compressor 11 is connected via an air flow splitter to a pair of air cavities 7, 8 for supplying air to a first air cavity 7 and a second cavity 8 of said pair at an hydrostatic pressure inside each cavity at the prevailing draught level of the vessel. The compressor 11, air cavities 7,8 and air flow splitter all are part of a dual cavity air lubrication system 100 according to the invention. In a similar manner, a single compressor 12 is connected via another air flow splitter to a pair of cavities 7',8' for supplying air to a first air cavity 7' and second air cavity 8' of said pair. The air compressor 12, air flow splitter and cavities 7', 8' all are part of another dual cavity air lubrication system 100' according to the invention which is of a similar construction as the dual cavity air lubrication system 100.

Each of the compressors 11,12 is further connected to a respective air inlet duct 13 for taking in ambient air. The compressors 11,12 are controlled by a controller 15, for regulating the air supply in dependence of the sailing speed, sea state and during starting and stopping.

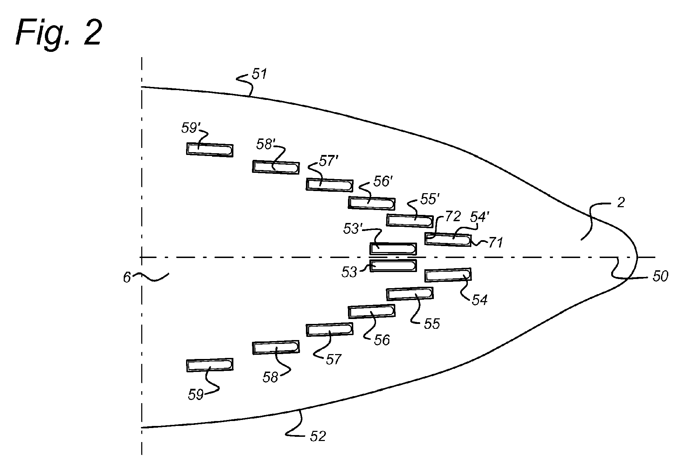

Figure 2 show that a number of cavity pairs 54,54' - 59, 59' is distributed along lines running from the centre line 50 to sides 51, 52 of the hull 6 when going in a rearward direction. Each cavity pair comprises a first cavity 54-59 and a second cavity 54'-59', wherein each cavity pair is part of a dual cavity air lubrication system according to the invention. In the example shown, the cavities of each pair are connected to only a single air compressor, e.g. cavities 54, 54'are part of a dual cavity air lubrication system in which the air is supplied to both cavities using only one air compressor, cavities 55, 55' are part of another dual cavity air lubrication system , and so on. Two central cavities 53,53' of one of the pairs are provided in proximity to the centre line 50. The centre line of the cavities 54-59' is at a slight angle with respect to the centreline 50. For cavities 54,55,56 and 57 and 54', 55', 56' and 57' the front part 71 is located closer to the bow 2 of the hull than the rear part 72 of the cavity ahead. This 'overlap' provides an even distribution of air bubbles across the flat bottom 6. Each cavity pair is connected to only a single air compressor of a dual cavity air lubrication system according to the present invention. It is however conceivable that instead of a dual cavity air lubrication system with two air cavities, an multiple cavity air lubrication system is provided, having a greater number of air cavities which are connected to only one common air compressor, e.g. in such a case cavities 54,54' and 55,55' would all be connected to the same air compressor and supplied with air using only that single air compressor.

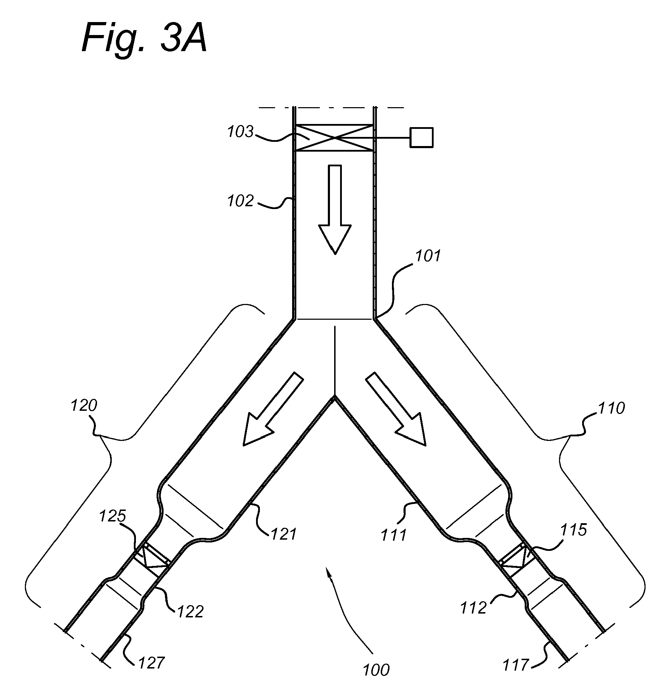

Figure 3A schematically shows a cross-sectional view of a portion of a dual cavity lubrication system 100 according to the present invention, in which the air compressor and the air cavities are not shown. The system 100 comprises an air flow splitter 101 having inlet pipe 102 which branches into a first branch pipe 110 and a second branch pipe 120. The first branch pipe 110 and the second branch pipe 120 comprise pipe sections 111 and 121 respectively, which extend from just downstream of the air inlet pipe 102 to directly upstream of respective restricted sections 112 and 122. The flow of air, indicated by arrows in Fig.3A, can thus travel from the air inlet pipe 102 through pipe sections 111, 121 before entering the restricted pipe sections 112, 122. The air lubrication systems 100 is further provided with an adjustable valve 103 which can be closed when the system is not in operation, i.e. when no compressed air is provided by the compressor 11 of the air lubrication system 100.

The branch pipes 110, 120 are each further provided with a passive valve 115, 125 adapted for substantially blocking flow of air from the branch pipes 110,120, in particular from pipe outlet sections 117,127 at the downstream ends thereof, back to the air inlet pipe 102. The passive valves also substantially block flow of air directed from one of the pipe outlet sections 117,127 to the other 127,117. Though the passive valves 115, 125 shown are non-return valves, leaky non-return valves may be used instead.

During regular flow of air from the air inlet pipe 102 to the outlet sections 117,127, here indicated schematically by arrows inside the air flow splitter 101, the flow of air coming from the air inlet pipe 102 is restricted by the restricted sections 112, 122 and to some extent resisted by the passive non-return valves 115,125. This causes a back pressure in the air inlet pipe 102 and a pressure drop across the valves 115, 125 in the direction from the air inlet pipe to the pipe outlet sections 117, 127 and substantially improves the evenness of smoothness of the air pressure in respective pipe outlet sections 117, 127. As long as the pressure in the air inlet pipe 102 is greater than the pressure in both pipe outlet sections 117, 127, and as long as both valves are open, there will be some flow of air through both outlet sections. As this flow tends to follow the path of least resistance, a greater portion of the total air flow will be through that outlet section which is at the lowest pressure of the two outlet sections. The resulting greater air flow rate will however increase the back pressure towards the air inlet pipe so that after a brief while the resistance to air flow in each of the branch pipes may even out and the effect of a sudden change in pressure in one of the cavities on the air flow through each of the outlet sections is substantially dampened.

The present invention thus improves the stability of the air supply to two air cavities while the air supply for both cavities originates from a single air inlet pipe that is to be connected to only a single air compressor. For instance when the vessel is rolling or when only one of the cavities is hit by a wave, the air lubrication system can thus at least partially compensate for temporary differences in pressure between both air cavities and prevent collapse of the air lubricating layer at each of the cavities.

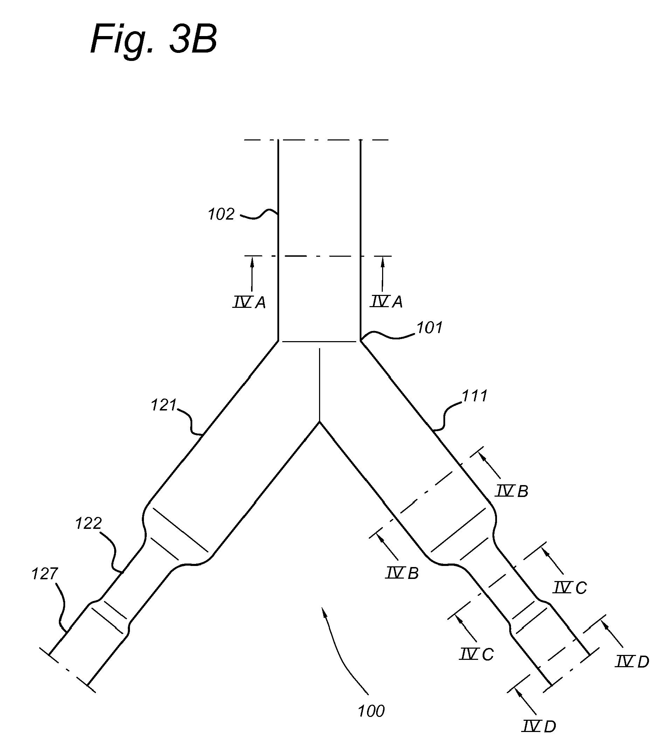

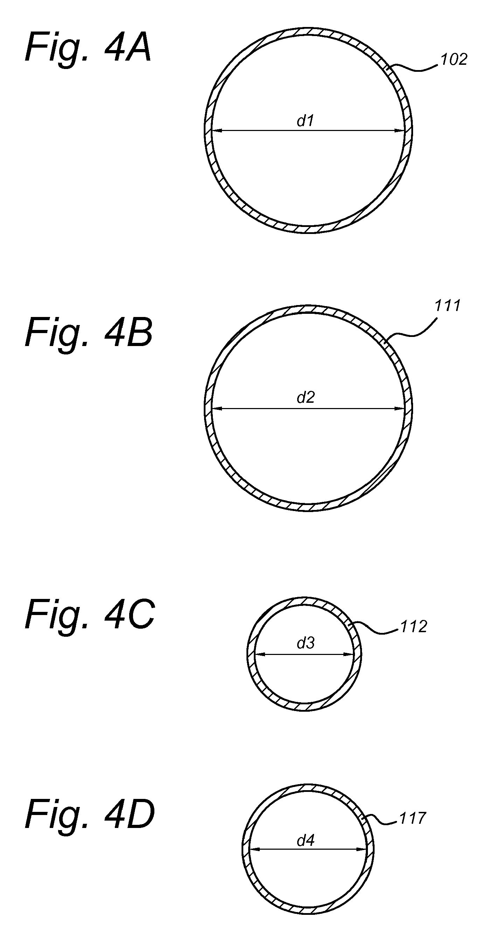

The restricted pipe sections 112,122 transition into the respective outlet sections 117, 127 which are arranged to be connected to the air cavities. The outlet sections 117, 127 each have a larger cross-sectional flow area than the corresponding restricted section (see also figures 3B and 4A-4D), so that any air stream that is directed from an outlet section back to the air inlet pipe must pass the corresponding restricted section where the increase in air pressure further helps the passive valve to close off the restricted section.

Though the air pressure within the pipe outlet sections 117, 127 is preferably substantially the same, this is not required for correct functioning of the air lubrication system as long as a sufficient flow of air is supplied to both cavities. For instance, pipe outlet section 117 may be connected to a first air cavity, with the pipe outlet section 127 connected to a second air cavity in which the air pressure is consistently lower than in the first air cavity.

Another possible source for operational differences in air pressure at the pipe outlets 117, 127 is formed by differences in the restriction of air flow caused by the passive valve 117 and passive valve 127. For instance, it is conceivable that a different kind of non-return valve is used in each branch pipe and/or that the non-return valves are differently dimensioned. Though the non-return valves 115, 125 shown in Fig. 3A are of a similar or same construction, typically there will be some differences in placement of the valves and/or air pressure thresholds for closing and opening each of the valves, which may lead to one of the valves restricting the air flow in its branch pipe to a different extent than the other valve, and to a corresponding difference in air pressure at the pipe outlet sections.

In an upstream portion of the air inlet pipe 102, just before the connection of the inlet pipe to the air compressor 11 or 12, a remote controlled adjustable valve 103 is provided for closing off the inlet 102 when the air compressor is inactive. When the air inlet is closed, there is substantially no flow of air through the first and second pipe sections 111,121 as air flow from the air inlet is prevented, and the restricted sections 112, 122 in combination with the non-return valves 115,125 prevent air from flowing back from said restricted sections to the pipe sections.

The same valve 103 may also be used to adjust the flow of air from the air compressor to the air inlet pipe, though it is typically more energy efficient to instead directly control the air compressor to output a desired flow of air to the air inlet pipe.

A top view of the same air flow splitter 101 of dual cavity air lubrication system 100 is show in figure 3B. The air inlet pipe 102 is preferably a heat insulated inlet pipe and made from material suitable for use in a salt-water environment, such as galvanized steel. The insulation helps prevent condensation from forming inside the air inlet and the branch pipes.

The cross-sectional flow area of the air inlet pipe is substantially constant along the length thereof. Just after the point where the branch pipes are split from the air inlet pipe, the branch pipes have a cross-sectional flow area that is substantially equal to that of the air inlet pipe. At the restricted section of each branch pipe the cross-sectional flow area is smaller than that of the air inlet pipe, whereas downstream of the restricted section the branch pipes have a cross-sectional flow greater than in the restricted area.

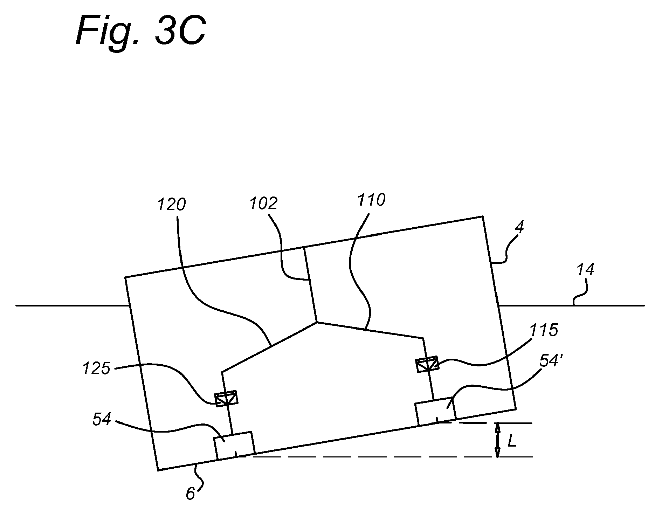

Figure 3C schematically shows a cross-sectional view through air cavities 54,54' of the vessel of figure 2, wherein the air cavities are connected to respective branch pipes 120,110 of an air splitter as shown in figures 3A and 3B. Fig. 3C shows the vessel at a roll relative to horizontal water surface 14, so that the cavity 54 is submerged further by a distance L in the water than the cavity 54'. Differences in relative level between the cavities cause corresponding differences in pressure in the respective cavities. For instance, if cavity 54 is submerged 1 m deeper than cavity 54', i.e. L equals 1 meter, then the resulting pressure difference between the cavities caused thereby is be 100 mbar. The dual cavity air lubrication system according to the invention substantially reduces interruption or change in air flow to both cavities during such a relative change in level between both cavities.

Cross-sectional areas of the pipes along lines A-A, B-B, C-C, and D-D are shown in figures 4A-4D respectively, all of which have a cross-sectional area with a circular contour. Fig. 4A shows that the inlet section 102 has an inner diameter of d1, which may be in the range of 110 to 180 mm.

Fig. 4B shows that the cross sectional area of the pipe section 111 of branch pipe 110 has a diameter d2 that is equal to the diameter d1, and that the cross sectional area of the pipe section 111 is equal to that of the air inlet pipe 102.

The restricted pipe section 112 shown in Fig. 4C has a cross-sectional area with a diameter d3, e.g. in the range of 50-90 mm, that is smaller than the diameter d2 of pipe section 111.

The restricted section 112 transitions into outlet section 117 downstream of the restricted section, and having a larger cross-sectional area than the restricted section. The diameter d4 of the cross-sectional area of the outlet section is larger than the diameter d3 of the restricted section, e.g. between 70-120 mm, but in any case is smaller than the diameter d2 of pipe section 111.

Though in figs. 4A-4D the cross-sectional areas all have a circular contour, other contour shapes are possible as well, e.g. oval and/or rectangular contour shapes, as long at the restricted section has a cross-sectional area that is smaller than that of both the outlet section and the pipe section, and preferably wherein the outlet section has a cross-sectional area that is smaller than that of the pipe section.

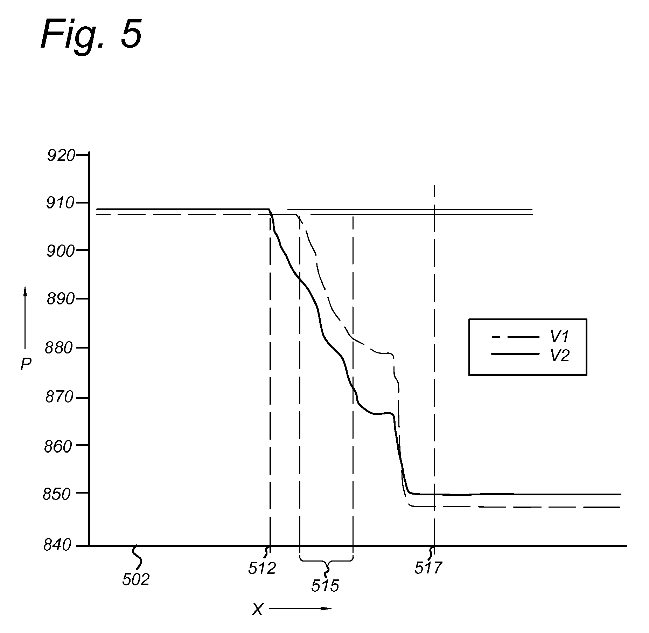

Figure 5 shows an exemplary graph of the air pressure P in millibar vs distance along the flow direction X, for an air stream V1 for the first air cavity and for an air stream V2 for supplying air to the second air cavity. Both air streams V1, V2 travel through a dual cavity air lubrication system according to the invention and originate from a single common air compressor.

The pressures up to point 502 of the flow direction are representative of the pressures of the air streams V1 and V2 in respective branch pipes that are part of a same air splitter, e.g. an air inlet pipe 101 as described above. The pressures from point 502 to 512 represent the pressures of the air streams V1, V2 within the pipe section of the respective branch pipes that are arranged upstream to the restricted section of the corresponding branch pipe. From point 502 to 512 along the flow direction these pressures are substantially equal for both branch pipes. The pressures from point 512 to 517 represent the pressures in the restricted sections of the branch pipes, wherein the drop in the air pressures is substantially caused by the respective non-return valves that are arranged across portion 515 in the restricted section. The non-return valves are adapted to open at an opening pressure of 20 mbar, and, as the air pressures at the left of portion 515 differ by more than 20 mbar from the air pressures at the right of portion 515, are thus open and let the air streams V1 and V2 pass through.

The pressures from point 517 represent the pressures in the pipe outlet sections of the first and second branch pipe, and is substantially equal to the air pressure of the first and second air cavity that are connected to the respective outlet sections. From the beginning of the restricted section 512 to the end of the restricted section 517 there is a drop in pressure of about 60 mbar for the air stream V1, and a drop in pressure of about 63 mbar for the air stream V2. At point 517 the air pressure of the air stream V1 in outlet section of the first branch pipe differs by about 3 mbar from the air pressure of the air stream V2 in the outlet section of the second branch pipe, so that a substantially even air pressure is achieved in the first and second

In the example shown, a single air compressor provides air at a pressure of about 907 mbar to the air inlet pipe, which pressure stays substantially constant in the air inlet pipe up to the restricted sections of the branches. The air pressures start to differ significantly as the air streams pass the respective valves at point 515. However, though in the beginning of the first restricted section the air pressure of the first air stream drops more than the air pressure of the second air stream in the beginning of the second air section, the air pressures of both air streams at point 517, i.e. at the outlet sections each branch pipe, remain substantially constant. It is noted that the respective air pressures at both outlet sections may differ somewhat from each other, e.g. due to differences in shape of the air cavity connected thereto, differences in length of the branch pipes, and so on. The improved stability of the air lubricating layer generated by each cavity as provided by the present invention is accomplished by ensuring that the air streams that are supplied the air cavities are each provided at a substantially constant air pressure.

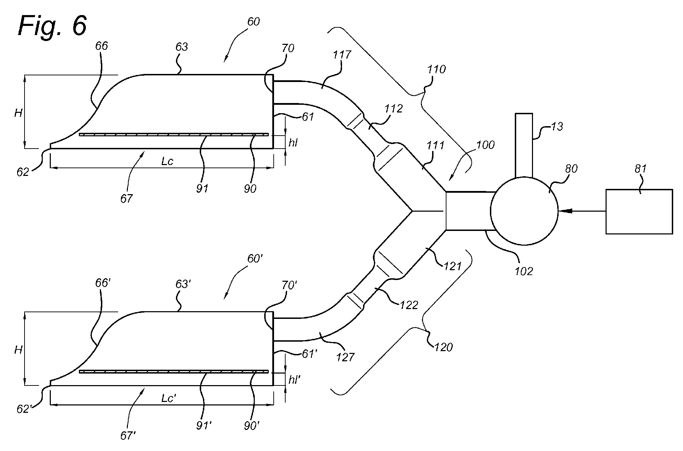

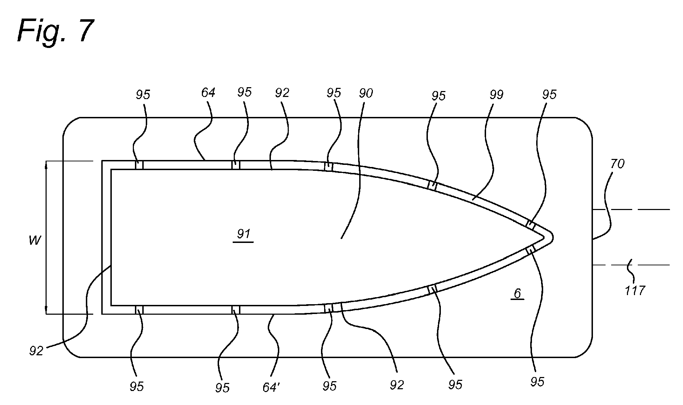

Figs. 6 shows a dual cavity air lubrication system comprising two cavities 60,60' each having a respective front end 61, 61', rear end 62, 62', a top wall 63, 63' two side walls (see fig. 7), a rear wall 66, 66', and an air inlet port 70, 70', and an air supply duct 71, 71' connected to the air inlet port 70, 71'. The cavities 60, 60' further comprises a respective opening 67, 67' which is substantially flush with bottom surface 6 of the hull. The opening 67,67' has a length Lc, Lc' which is relatively short compared the vessel length Lh and which has a length of between 2 m and 10 m. The width W of the opening 67 (see Fig. 7) is preferably between 0,5 m and 1,5 m. The cavities 60, 60' have a height H,H' respectively, measured from the bottom surface 6 to a top wall 63,63' which height may be between 0,2 m and for instance 0,5 m.

Other small size cavities having a length Lc, Lc' between 1.5m and 5 m at a height H, H' of between 0.2 m and 1.5 m, preferably 0.2 m and 1 m also provide an efficient and stable air lubricating layer.

Near a front end 61,61' of each cavity 60,60' an air inlet port 70,70' is provided, which is connected to an a outlet section 117,127 of respective branch pipe 110,120 of an dual cavity air lubrication system 100. A compressor 80 takes in atmospheric air through a duct 13 and supplies compressed air to both cavities 60,60' in order to expel water therefrom. A controller 81, such as a computer device, is connected to the compressor 80 for operating the compressor depending on the speed of the vessel. When the vessel is sailing through the water the moving water across the water-air interfaces in the cavities 60,60' results in a Kelvin Helmholtz mixing effect and forms air bubbles 9. In each cavity 60,60' these bubbles escape via a bubble outflow region at the rear end 62,62' thereof. At their rear ends 62,62', the cavities 60,60' each have a downwardly sloping surface 66,66' forming a wedge-shaped space near the rear 62, 62' of the respective cavity. From this outflow region, the bubbles 9 spread towards the stern 3 of the hull 4, to cover a majority of the bottom surface 6. Though the downwardly sloping surface can be formed as straight wall, it is here shown as curved wall 66,66' which at the position 62,62' of the bottom surface 6 is tangent with said bottom surface 6. In order for the bubbles to be guided smoothly out of a cavity it is sufficient that the lower part of the rear wall 66,66' is curved or inclined. For a smooth transition of the bubbles from the cavity is important the rear wall 66, 66' extends all the way to the position 62,62' of the bottom surface 6. It is not necessary that the portion of the rear wall 66,66' that is adjacent the top wall 63,63' is curved or inclined. This portion of the rear wall 66,66' could, for example, be vertical.

As shown in Fig. 6, each cavity 60,60' is provided with a wave deflecting member 90,90' which extends transversely therein and has a closed planar bottom side 91,91' arranged at a distance h1, h1' of between 2-15 cm from the respective opening 67, 67'. Typically, this distance must be at least 2 cm to ensure sufficient Kelvin-Helmholtz mixing to form an air lubricating layer. Each of these wave deflecting members stays clear from its corresponding top wall 63,63' and/or side walls for allowing a free flow of air through the cavity. Though side walls 64,64' are only shown for air cavity 60 in figure 7, it will be appreciated that the air cavity 60' comprises similar sidewalls. The wave deflecting members 90,90' facilitate the starting-up of the air lubrication system. Before the air lubrication system is activated both cavities 60,60' will normally be full of water. The wave deflecting members 90,90' serve to deflect the waves emerging from the front ends 61,61' of the cavities 60,60' when the vessel is moving forward through the water, and the turbulence generated there from will be deflected so that less air will be drawn out of the cavities 60,60' during the initial start-up of the air lubrication system. The wave deflecting members 90,90' each have a peripheral edge (shown for air cavity 60 as peripheral edge 92 in figure 7) which is spaced apart from the sidewalls as well as from the rear wall 66, 66'. In the embodiment shown in fig. 7, the peripheral edge 92 of the wave deflecting member 90 is spaced apart from the sidewalls 64,64' and from the rear wall by means of spacer arms 95 which bridge a gap 99 between the peripheral edge 92 and the side walls through which air can pass from within the cavity 60 towards the opening 67.

The present invention has been described above with reference to a number of exemplary embodiments as shown in the drawings. Modifications and alternative implementations of some parts or elements are possible, and are included in the scope of protection as defined in the appended claims.

## Claims

1. Dual cavity air lubrication system (100) comprising:
a first air cavity (54 - 59) and a second air cavity (54'- 59') spaced apart therefrom, wherein said first and second air cavity are adapted for providing an air lubricating layer (9) between the hull (6) of a vessel (1) and the water flowing under the hull as said vessel is moving through the water;
an air flow splitter (101) comprising an air inlet pipe (102) which branches into a first branch pipe (110) which is connected to said first air cavity, and a second branch pipe (120) which is connected to said second air cavity;
an air compressor (80) connected to said air inlet pipe (102) for supplying air to both said first and second air cavity;
**characterized in that** said system (100) further comprises:
a first passive valve (115) arranged in said first branch pipe (110), and a second passive valve (125) arranged in said second branch pipe (120), wherein said branch pipes are in fluid communication with each other upstream from their respective valves, and wherein said valves are adapted for regulating the flow of air to said air cavities to compensate for difference in air pressure in said cavities caused by a relative change in level of the cavities due to roll or heel of the vessel.

2. The air lubrication system according to claim 1, wherein said first and second valves are non-return valves or leaky non-return valves arranged for substantially blocking flow of air from the respective air cavities to the air inlet pipe.

3. The air lubrication system according to claim 1 or 2, wherein said first and second valves are pressure-differential regulator valves adapted for causing a predetermined substantially constant pressure drop across the valve.

4. The air lubrication system according to any one of the preceding claims, wherein each of said valves is adapted for regulating a pressure drop its respective branch pipe such that there is a pressure drop of at least 20 mbar, preferably at least 100mbar, more preferably between 100 and 200 mbar, from an inlet side of said valve to an outlet side of said valve when the compressor supplies air to said air inlet pipe to generate the air lubricating layer.

5. The air lubrication system according to any one of the preceding claims, wherein said first and second valve are each biased towards allowing flow of air through said valve in a downstream direction of its respective branch pipe and against allowing flow of air through said valve in the opposite direction.

6. The air lubrication system according to any one of the preceding claims, wherein said first and second branch pipe each comprise a restricted pipe section (112;122) having a smaller cross-sectional flow area than said air inlet pipe (102), wherein said first passive valve (115) is arranged in the first restricted pipe section (112) and said second passive valve (125) is arranged in the second restricted pipe section (122).

7. The air lubrication system according to claim 6, wherein said first and second branch pipe (110; 120) each further comprise an outlet section (117; 127) downstream from its restricted section (112; 122) and connected thereto and having a larger cross-sectional flow area than said restricted section (112; 122).

8. The air lubrication system according to claim 7, wherein said cross-sectional flow area of said first and/or second outlet section (117;127) is smaller than that of the air inlet pipe (101), preferably by a factor 2 or more, more preferably by a factor between 2 and 3,5, and most preferably by a factor of about 2,25.

9. The air lubrication system according to any one of claims 6-8, wherein the cross-sectional flow area of said first and/or second restricted pipe section (112; 122) is smaller by a factor 3 or more than that of the air inlet pipe, more preferably by a factor between 3 and 8, most preferably by a factor 4.

10. The air lubrication system according to any one of claims 6-9, wherein said first and second branch pipe (110; 120) each further comprise a pipe section which extends from said air inlet pipe to the respective restricted section, said pipe section having a larger cross-sectional flow area than said restricted section, preferably substantially equal to said cross-sectional flow area of the air inlet pipe.

11. The air lubrication system according to any one of claims 6-10, wherein the restricted section of each branch pipe is arranged at distance of less than 5 m, preferably less than 3 m, most preferably less than 1,5 m from the connection of said branch pipe to its corresponding air cavity.

12. The air lubrication system according to any one of claims 6-11, wherein the cross-sectional flow area of said branch pipes (110; 120) and/or said restricted sections (112, 122) thereof has a circular contour, preferably wherein the cross-section flow area of said air inlet pipe (101) has a circular contour.

13. The air lubrication system according to any one of the preceding claims, further comprising an adjustable valve (103) in said air inlet pipe (102).

14. The air lubrication system according to any one of the preceding claims, wherein said first branch pipe (110) and said second branch pipe (120) each have a length of less than 10m from their end proximate to the air splitter section to the ends connected to their respective air cavity.

15. The air lubrication system according to any one of the preceding claims, wherein said first and second air cavity each comprise:
sidewalls (71,71') and a top wall (72) defining said cavity with an opening (73) situated in an interface plane (76) that is transversal to the sidewalls (71,71'), the opening (73) having a front end (74) and a rear end (75) seen in the length direction of the cavity, an air inlet port (77) spaced from the opening (73) and connected to one of said branch pipes (110,120) for introducing air into the cavity, wherein the length of the opening (73) of the cavity is between 2 and 10 m, and the distance of the top wall (72) from the interface plane (76) is between 0,2 m and 0,5 m.

16. The air lubrication system according to any one of the preceding claims, wherein said air compressor is the only air compressor (80) that is connected to said air inlet pipe (102) for supplying air to both said first and second air cavity.

17. Vessel (1) comprising a hull (4) having a center line (50), opposing sides (51,52) and a substantially flat bottom (6), the vessel having a number of air lubricating systems according to any one of the preceding claims.

18. Vessel according to claim 17, wherein said cavities each have a length (Lc), a distance of the top wall (19) from the interface plane (30) (Hc) and a width (W), wherein the ratio Lc/Hc is in the range of 7:1 to 13:1, the ratio W/H is in the range of 1.3:1 to 2.5:1 and the ratio Lc/W is in the range of 3.5 to 1 to 7:1.

19. Vessel according to claim 17 or 18, wherein said first and second air cavity of one or more of said dual cavity air lubricating systems are arranged adjacent to each other along the width of the hull (4) and at the same distance to the flat bottom (6).

20. Vessel according to claim 17, 18 or 19, wherein the vessel accommodates said first and said second air cavities of each of said air lubricating systems on opposite sides of the center line at a predetermined length position.

21. Vessel according to any one of claims 17-20, wherein the vessel accommodates said first and said second air cavities of each of said air lubricating systems on a same side of the center line at a predetermined length position, and wherein in each of said air lubricating systems said first air cavity neighbours said second air cavity.
